(19) Europäisches Patentamt
European Patent Office
Office européen des brevets

(11) EP 3 428 851 A1

(12) DEMANDE DE BREVET EUROPEEN

(43) Date de publication:
16.01.2019 Bulletin 2019/03

(51) Int Cl.:
G06K 9/46 (2006.01)  H04N 5/355 (2011.01)

(21) Numéro de dépôt: 18180984.9

(22) Date de dépôt: 29.06.2018

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME
Etats de validation désignés:
KH MA MD TN

(30) Priorité: 11.07.2017 FR 1756555

(71) Demandeur: Commissariat à l'Energie Atomique et aux Energies Alternatives
75015 Paris (FR)

(72) Inventeurs:
• DUPOIRON, Camille
  38000 GRENOBLE (FR)
• GUICQUERO, William
  91440 BURES-SUR-YVETTE (FR)
• SICARD, Gilles
  38920 CROLLES (FR)
• VERDANT, Arnaud
  38330 SAINT-NAZAIRE-LES-EYMES (FR)

(74) Mandataire: Cabinet Beaumont
4, Place Robert Schuman
B.P. 1529
38025 Grenoble Cedex 1 (FR)

(54) PROCÉDÉ DE TRAITEMENT D'UNE IMAGE

(57) L'invention concerne un procédé de traitement d'une image comprenant des pixels (101) répartis en cellules (103) et en blocs (105), ce procédé comprenant les étapes suivantes :
a) pour chaque cellule (103), générer n premières valeurs d'intensités de gradients d'orientations distinctes, chaque première valeur étant une somme pondérée des valeurs des pixels (101) de la cellule (103) ;
b) pour chaque cellule (103), déterminer une orientation de gradient principale de la cellule (103), et une deuxième valeur représentative de l'intensité du gradient dans cette orientation principale ;
c) pour chaque bloc (105), générer un descripteur de n valeurs correspondant respectivement, pour chacune des n orientations de gradient, à la somme des deuxièmes valeurs des cellules (103) du bloc (105) ayant l'orientation de gradient considérée pour orientation de gradient principale.

Fig 1

**Description**

Domaine

La présente demande concerne un procédé de traitement d'une image au moyen d'un dispositif électronique de traitement, et un système comportant un capteur d'images et un circuit de traitement adapté à mettre en oeuvre ce procédé.

Exposé de l'art antérieur

Dans de nombreuses applications, on a besoin d'analyser de façon automatisée des images acquises par un capteur d'images, pour détecter la présence d'éléments caractéristiques prédéfinis dans une scène vue par le capteur.

Diverses méthodes d'analyse ont été proposées. En particulier, on a proposé des méthodes d'analyse basées sur la génération de descripteurs permettant une représentation compacte de l'image, tout en préservant l'information utile pour l'application considérée.

A titre d'exemple, l'article intitulé "Histograms of oriented gradients for human detection", de N. Dalal et B. Triggs (IEEE Computer Society Conférence on Computer Vision and Pattern Recognition (CVPR'05), 2005, vol. 1, pp. 886-893), décrit une méthode d'analyse basée sur la génération de descripteurs construits à partir d'histogrammes de gradients dans différentes orientations. Cette méthode est particulièrement performante, notamment pour des applications de détection de personnes, mais a pour inconvénient que la génération des descripteurs nécessite des calculs relativement lourds, ce qui se traduit par une consommation énergétique relativement importante du dispositif de traitement.

D'autres méthodes d'analyse basées sur d'autres types de descripteurs ont été proposées, notamment dans l'article intitulé "ORB: An efficient alternative to SIFT or SURF", de E. Rublee, V. Rabaud, K. Konolige, et G. Bradski (International conférence on computer vision, 2011, pp. 2564-2571), dans l'article intitulé "Brief: Binary robust independent elementary features", de M. Calonder, V. Lepetit, C. Strecha, et P. Fua (European conférence on computer vision, 2010, pp. 778-792), dans l'article intitulé "Freak: Fast retina keypoint", de A. Alahi, R. Ortiz, et P. Vandergheynst (IEEE conférence on Computer vision and pattern récognition, 2012, pp. 510-517), et dans l'article intitulé "BRISK: Binary robust invariant scalable keypoints", de S. Leutenegger, M. Chli, et R. Y. Siegwart (International conférence on computer vision, 2011, pp. 2548-2555). Là encore, bien que performantes, ces méthodes présentent l'inconvénient de nécessiter des calculs relativement complexes pour générer les descripteurs.

Il serait souhaitable de pouvoir disposer d'un procédé d'analyse d'images performant, basé sur des descripteurs compacts, robustes, et plus simples à calculer que les descripteurs des méthodes connues.

Résumé

Ainsi, un mode de réalisation prévoit un procédé de traitement, au moyen d'un dispositif électronique, d'une image comprenant une pluralité de pixels répartis en un ou plusieurs blocs comprenant chacun plusieurs cellules de plusieurs pixels, ce procédé comprenant les étapes suivantes :

a) pour chaque cellule, générer n premières valeurs d'intensités de gradients d'orientations distinctes, chaque première valeur d'intensité de gradient étant une somme pondérée des valeurs des pixels de la cellule ;
b) pour chaque cellule, déterminer, à partir des n premières valeurs d'intensités de gradients calculées à l'étape a), une orientation de gradient principale de la cellule, et une deuxième valeur représentative de l'intensité du gradient dans cette orientation principale ; et
c) pour chaque bloc, générer un descripteur de n valeurs correspondant respectivement, pour chacune des n orientations de gradient, à la somme des deuxièmes valeurs des cellules du bloc ayant l'orientation de gradient considérée pour orientation de gradient principale.

Selon un mode de réalisation, l'étape a) comprend une étape initiale de quantification sur 1-bit des valeurs des pixels de la cellule, chaque première valeur d'intensité de gradient étant une somme pondérée des valeurs quantifiées sur 1-bit des pixels de la cellule.

Selon un mode de réalisation, à l'étape a), lors de l'étape initiale de quantification sur 1-bit des valeurs des pixels, des seuils de quantification distincts sont utilisés pour des cellules distinctes de l'image.

Selon un mode de réalisation, à l'étape a), pour chaque cellule, le seuil de quantification utilisé lors de l'étape initiale de quantification sur 1-bit des valeurs des pixels de la cellule est fonction de la valeur maximale de pixel de la cellule ou du bloc contenant la cellule.

Selon un mode de réalisation, à l'étape a), les coefficients de pondération utilisés pour générer les n premières valeurs d'intensités de gradients d'orientations distinctes de chaque cellule sont des coefficients binaires.

Selon un mode de réalisation, à l'étape a), les coefficients de pondération utilisés pour générer les n premières valeurs d'intensités de gradients d'orientations distinctes de chaque cellule sont des coefficients non binaires.

Selon un mode de réalisation, les n orientations de gradient de l'étape a) sont séparées deux à deux d'une même distance angulaire.

Selon un mode de réalisation, à l'étape b), on sélectionne comme orientation de gradient principale de la cellule l'orientation pour laquelle la première valeur d'intensité de gradient générée à l'étape a) est maximale.

Selon un mode de réalisation, l'étape b) comprend :

une étape de génération d'un vecteur B résultant d'une opération de convolution entre un vecteur A de dimension n constitué par les n premières valeurs d'intensités de gradients générées à l'étape a) et un signal triangulaire ; et
une étape de sélection, comme orientation de gradient principale de la cellule, de l'orientation pour laquelle la valeur du vecteur B est maximale.

Selon un mode de réalisation, à l'étape b), la deuxième valeur représentative de l'intensité du gradient de la cellule dans l'orientation de gradient principale de la cellule est pondérée par un coefficient fonction de la distribution des valeurs des pixels de la cellule.

Un autre mode de réalisation prévoit un système comportant :

un capteur d'images comprenant une pluralité de pixels répartis en un ou plusieurs blocs comprenant chacun plusieurs cellules de plusieurs pixels ; et
un circuit de traitement adapté à mettre en oeuvre, pour chaque image acquise par le capteur, un procédé de traitement tel que défini ci-dessus.

Selon un mode de réalisation, le capteur d'images est un capteur à codage temporel dans lequel chaque pixel comprend une photodiode et un comparateur comparant la tension aux bornes de la photodiode à une tension de référence, chaque pixel étant adapté, lors d'une phase d'acquisition d'une image, à s'allumer en générant une impulsion lorsque la tension aux bornes de sa photodiode atteint la tension de référence.

Selon un mode de réalisation, le circuit de traitement comprend, pour chaque bloc de pixels du capteur, un circuit adapté à, lors d'une phase d'acquisition d'une image :

déterminer l'instant où un premier pixel du bloc s'allume ; et
après une période d'inhibition prédéfinie à compter de cet instant, déterminer quels pixels du bloc se sont allumés et quels pixels du bloc ne se sont pas allumés pendant la période d'inhibition.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une représentation schématique très simplifiée d'un exemple d'un capteur d'images ;
la figure 2 est un organigramme illustrant de façon schématique des étapes d'un exemple d'un mode de réalisation d'un procédé de traitement d'une image acquise au moyen du capteur de la figure 1 ;
les figures 3A et 3B illustrent plus en détail des exemples de mise en oeuvre d'une étape de calcul de valeurs de gradients du procédé de la figure 2 ;
les figures 4A, 4B et 5 illustrent plus en détail des exemples de mise en oeuvre d'une étape de sélection d'une orientation de gradient majoritaire du procédé de la figure 2 ; et
la figure 6 illustre une étape de calcul d'un descripteur d'une image ou d'une portion d'une image, selon un exemple d'un mode de réalisation d'un procédé de traitement d'une image acquise au moyen du capteur de la figure 1.

Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, la réalisation des circuits internes des capteurs d'images, et notamment des pixels et des circuits périphériques de contrôle et de lecture, n'a pas été détaillée, le procédé de traitement proposé étant compatible avec toutes ou la plupart des architectures connues de capteurs d'images. Par ailleurs, la réalisation de circuits de traitement adaptés à mettre en oeuvre le procédé de traitement décrit n'a pas été détaillée, la réalisation de tels circuits étant à la portée de la personne du métier à partir des indications fonctionnelles de la présente description, étant entendu que les circuits de traitement peuvent être soit partiellement ou totalement intégrés au capteur d'images, soit externes au capteur d'images.

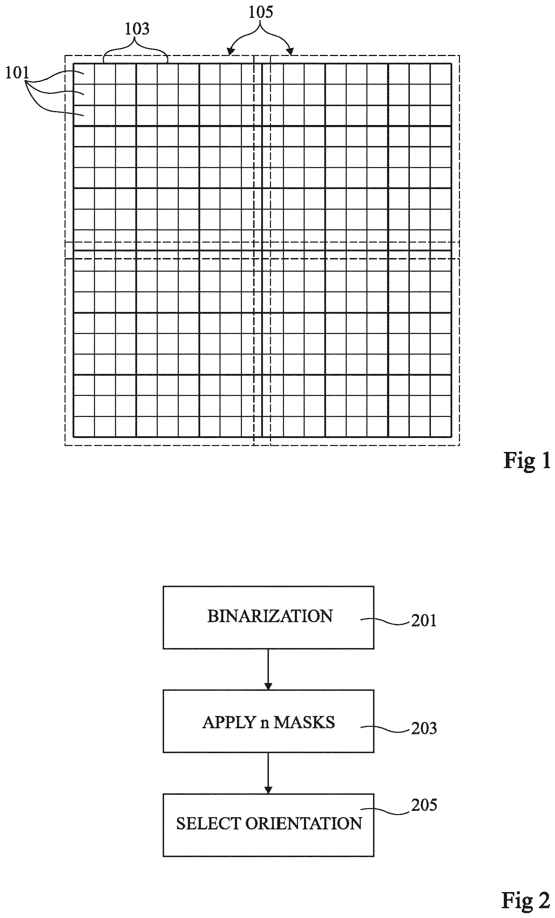

La figure 1 est une représentation schématique très simplifiée d'un exemple d'un capteur d'images. Le capteur de la figure 1 comprend une pluralité de pixels 101, par exemple identiques ou similaires, disposés en matrice selon des lignes et des colonnes. Lors d'une phase d'acquisition d'une image, chaque pixel 101 fournit une valeur de sortie représentative d'un niveau de luminosité reçu par le pixel, l'image étant constituée par l'ensemble des valeurs de sortie des pixels du capteur. Les pixels 101 du capteur sont répartis en plusieurs cellules 103 de plusieurs pixels chacune. Les cellules 103 sont par exemple identiques ou similaires. Dans l'exemple représenté, chaque cellule 103 correspond à une sous-matrice de 3*3 pixels voisins du capteur et chaque pixel 101 appartient à une seule cellule 103 du capteur. Dans l'exemple de la figure 1, et comme cela sera expliqué plus en détail ci-après, les cellules sont en outre réparties en plusieurs blocs 105 de plusieurs cellules 103 chacun. Dans la suite de la description, on désignera par les mêmes références 101, 103 et 105 les pixels, cellules, et blocs de cellules du capteur, et des pixels, cellules et blocs de cellules correspondants d'une image acquise par le capteur.

La figure 2 est un organigramme illustrant de façon schématique un exemple d'un mode de réalisation d'un procédé de traitement d'une image acquise par le capteur de la figure 1. La figure 2 illustre plus particulièrement trois étapes 201, 203 et 205 mises en oeuvre de façon successive pour chacune des cellules de l'image. Selon le type d'implémentation choisi, le procédé de la figure 2 peut être appliqué de façon simultanée à toutes les cellules de l'image ou à une partie des cellules de l'image, ou être appliqué de façon séquentielle aux différentes cellules.

Le procédé de la figure 2 comprend une première étape 201 (BINARIZATION) au cours de laquelle la valeur de chaque pixel de la cellule dans l'image initiale est quantifiée sur 1-bit. Le seuil de quantification sur un bit peut être commun à tous les pixels 101 de l'image. A titre d'exemple, le seuil de quantification est commun à tous les pixels de l'image et est fixé indépendamment des valeurs des pixels de l'image. A titre de variante, le seuil de quantification est commun à tous les pixels de l'image et est fixé en fonction de la valeur d'au moins un pixel de l'image, par exemple en fonction de la valeur du pixel le plus lumineux de l'image. Dans un mode de réalisation préféré, le seuil de quantification est défini cellule par cellule, ou bloc de cellules par bloc de cellules. Pour chaque cellule ou bloc de cellules, le seuil de quantification peut être choisi en fonction de la valeur d'au moins un pixel de la cellule ou du bloc de cellules. A titre d'exemple, pour chaque pixel 101 de l'image, le seuil de quantification est choisi en fonction de la valeur maximale Vmax des pixels de la cellule 103 ou du bloc de cellules 105 comprenant le pixel, étant entendu que les valeurs des pixels sont d'autant plus élevées que les pixels sont lumineux, et inversement. A titre d'exemple, pour chaque cellule 103 ou bloc de cellules 105 de l'image, le seuil de quantification des pixels de la cellule ou du bloc est choisi égal à Vmax-$\Delta$, où $\Delta$ est une valeur qui peut être commune à toutes les cellules ou à tous les blocs de cellules de l'image, ou être elle-même fonction de la valeur maximale Vmax de la cellule 103 ou du bloc de cellules 105 considéré. A titre d'exemple, pour chaque cellule ou bloc de cellules, la valeur $\Delta$ est égale à X*Vmax, où X est un coefficient compris entre 0 et 1, qui peut être commun à toutes les cellules ou à tous les blocs de cellules de l'image.

Un avantage de prévoir, pour chaque pixel 101, un seuil de quantification choisi en fonction de la valeur maximale Vmax des pixels de la cellule 103 ou d'un bloc de cellules comprenant le pixel, est que ceci permet d'établir une adaptation locale du seuil en fonction du niveau de luminosité local. En particulier, ceci permet de préétablir une normalisation du ou des futurs descripteurs générés pour l'image. Dans le cas d'une quantification non linéaire des pixels (codage temporel par exemple), l'adaptation locale du seuil permet de définir des durées d'inhibition plus homogènes.

A l'issue de l'étape 201, on a associé à chaque pixel de la cellule une valeur binaire d'un premier niveau, par exemple la valeur 0, si la valeur du pixel correspondant dans l'image d'origine est inférieure au seuil de quantification du pixel, et d'un deuxième niveau, par exemple la valeur 1, si la valeur du pixel correspondant dans l'image initiale est supérieure au seuil de quantification.

Le procédé de la figure 2 comprend en outre une deuxième étape 203 (APPLY n MASKS) au cours de laquelle on calcule, pour la cellule considérée, une série de n valeurs d'intensités de gradients VG1, ... VGn d'orientations distinctes, où n est un entier supérieur ou égal à 2.

Chacune des valeurs d'intensités de gradients VG1, ... VGn est le résultat d'une somme pondérée des valeurs binaires (calculées lors de l'étape 201) des pixels de la cellule. Les n jeux de coefficients de pondération G1, ... Gn, appelés masques, utilisés pour calculer respectivement les n valeurs d'intensités de gradients VG1, ... VGn, définissent les orientations respectives des n gradients considérés.

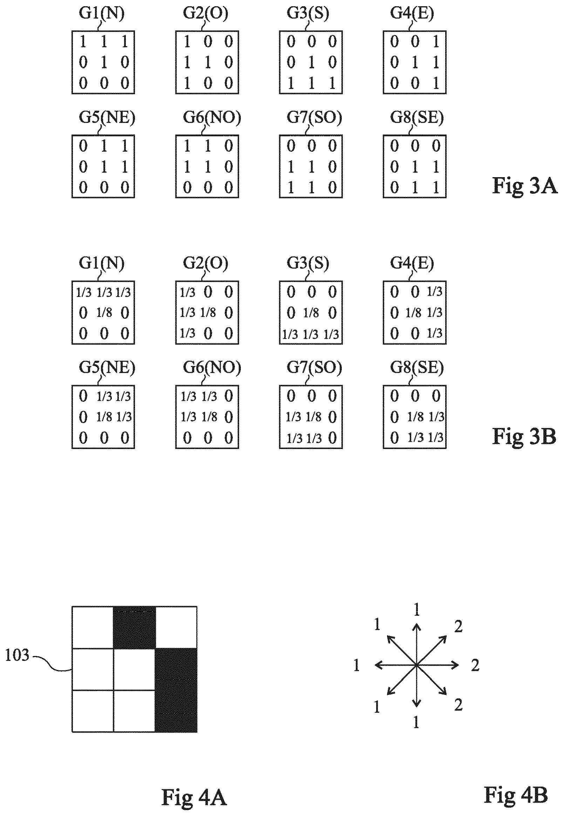

La figure 3A illustre, à titre d'exemple, un ensemble de n = 8 jeux de coefficients de pondération ou masques G1, G2, G3, G4, G5, G6, G7 et G8 pouvant être utilisés pour calculer, pour chaque cellule 103, 8 valeurs d'intensités de gradients VG1, VG2, VG3, VG4, VG5, VG6, VG7 et VG8 d'orientations distinctes. On se place ici dans une configuration du type illustré par la figure 1, dans laquelle chaque cellule 103 correspond à une sous-matrice de 3*3 pixels de l'image. Chaque jeu de coefficients de pondération comprend donc 3*3 coefficients, représentés sur la figure 3A sous la forme d'une matrice orientée de la même manière qu'une cellule 103 du capteur de la figure 1. Dans cet exemple, les orientations de gradient définies par les masques G1, ... G8 sont séparées deux à deux d'une même distance angulaire de l'ordre de π/4. De plus, dans cet exemple, les coefficients de pondération sont des coefficients binaires.

Dans le masque G1, les coefficients de pondération associés aux pixels de la première ligne de la cellule 103 ainsi qu'au pixel central de la cellule ont la valeur 1, et les autres coefficients de pondération ont la valeur 0.

Dans le masque G2, les coefficients de pondération associés aux pixels de la première colonne de la cellule 103 ainsi qu'au pixel central de la cellule ont la valeur 1, et les autres coefficients de pondération ont la valeur 0.

Dans le masque G3, les coefficients de pondération associés aux pixels de la dernière ligne de la cellule 103 ainsi qu'au pixel central de la cellule ont la valeur 1, et les autres coefficients de pondération ont la valeur 0.

Dans le masque G4, les coefficients de pondération associés aux pixels de la dernière colonne de la cellule 103 ainsi qu'au pixel central de la cellule ont la valeur 1, et les autres coefficients de pondération ont la valeur 0.

Dans le masque G5, les coefficients de pondération associés aux pixels de la première colonne et de la dernière ligne de la cellule 103 ont la valeur 0, et les autres coefficients de pondération ont la valeur 1.

Dans le masque G6, les coefficients de pondération associés aux pixels de la dernière colonne et de la dernière ligne de la cellule 103 ont la valeur 0, et les autres coefficients de pondération ont la valeur 1.

Dans le masque G7, les coefficients de pondération associés aux pixels de la première ligne et de la dernière colonne de la cellule 103 ont la valeur 0, et les autres coefficients de pondération ont la valeur 1.

Dans le masque G8, les coefficients de pondération associés aux pixels de la première ligne et de la première colonne de la cellule 103 ont la valeur 0, et les autres coefficients de pondération ont la valeur 1.

Dans l'orientation de la figure 3A, les masques G1, G2, G3, G4, G5, G6, G7 et G8 correspondent respectivement à des gradients d'orientation nord (N), ouest (O), sud (S), est (E), nord-est (NE), nord-ouest (NO), sud-ouest (SO) et sud-est (SE).

On notera que les modes de réalisation décrits ne se limitent pas aux exemples de motifs de masques représentés sur la figure 3A, ni au nombre n=8 d'orientations de gradient distinctes considéré dans l'exemple de la figure 3A. De préférence, les orientations de gradient définies par les masques G1, ... Gn sont séparées deux à deux d'une même distance angulaire de 2π/n.

Par ailleurs, les coefficients de pondération appliqués pour calculer les n valeurs d'intensité de gradient VG1, ... VGn ne sont pas nécessairement binaires.

La figure 3B illustre un autre exemple d'un ensemble de n = 8 jeux de coefficients de pondération ou masques G1, G2, G3, G4, G5, G6, G7 et G8 pouvant être utilisés pour calculer, pour chaque cellule 103, 8 valeurs de gradient VG1, VG2, VG3, VG4, VG5, VG6, VG7 et VG8 d'orientations distinctes.

Les masques de la figure 3B diffèrent des masques de la figure 3A en ce que, dans l'exemple de la figure 3B, les coefficients de pondération sont des coefficients non binaires. Plus particulièrement, dans l'exemple de la figure 3B, chacun des masques G1, G2, G3, G4, G5, G6, G7 et G8 est obtenu en multipliant chaque coefficient de pondération du masque correspondant de la figure 3A par l'inverse du nombre de masques dans lesquels le coefficient considéré est non nul. Ainsi, dans chacun des masques G1, G2, G3, G4, G5, G6, G7 et G8, le coefficient de pondération associé au pixel central de la cellule a la valeur 1/8. Dans le masque G1, les coefficients de pondération associés aux pixels de la première ligne de la cellule ont la valeur 1/3. Dans le masque G2, les coefficients de pondération associés aux pixels de la première colonne de la cellule ont la valeur 1/3. Dans le masque G3, les coefficients de pondération associés aux pixels de la dernière ligne de la cellule ont la valeur 1/3. Dans le masque G4, les coefficients de pondération associés aux pixels de la dernière colonne de la cellule ont la valeur 1/3. Dans le masque G5, les coefficients de pondération associés aux trois pixels du coin supérieur droit de la cellule ont la valeur 1/3. Dans le masque G6, les coefficients de pondération associés aux trois pixels du coin supérieur gauche de la cellule ont la valeur 1/3. Dans le masque G7, les coefficients de pondération associés aux trois pixels du coin inférieur gauche de la cellule ont la valeur 1/3. Dans le masque G8, les coefficients de pondération associés aux trois pixels du coin inférieur droit de la cellule ont la valeur 1/3. Dans chaque masque, les coefficients de pondération associés aux autres pixels ont la valeur 0. Un avantage du choix de masques de la figure 3B est qu'il permet de préétablir une normalisation du ou des futurs descripteurs générés pour représenter l'image. A titre de variante, la pondération appliquée aux coefficients de chaque masque peut varier en fonction de la cellule 103 considérée ou du bloc de cellules 105 considéré.

A l'issue de l'étape 203, on dispose, pour la cellule considérée (après n sommations des valeurs binaires des pixels pondérées respectivement par les coefficients correspondants des n masques G1, ... Gn), d'une série de n valeurs d'intensités de gradients d'orientations distinctes VG1, ... VGn.

Pour plus de robustesse, on peut, à titre de variante, écarter de ce processus les pixels dont la valeur binaire clignote, c'est-à-dire change d'état entre deux phases d'acquisition successive d'une image. En effet, pour les pixels dont le niveau d'éclairement est proche du seuil de quantification, le bruit temporel peut conduire à un clignotement de la valeur binaire du pixel, pouvant conduire à faire varier l'orientation de gradient majoritaire du bloc considéré. La suppression des pixels clignotant par un filtrage approprié permet de rendre les traitements associés aux vecteurs calculés plus robustes. A titre de variante, un filtrage peut être prévu pour éliminer du traitement les gradients dont l'orientation majoritaire varie de façon récurrente, par exemple de π/2 ou de π/4 sur plusieurs trames successives.

Le procédé de la figure 2 comprend en outre une étape 205 (SELECT ORIENTATION) au cours de laquelle on détermine, pour la cellule considérée, à partir des n valeurs d'intensités de gradients VG1, ... VGn calculées à l'étape 203, une orientation de gradient principale OP de la cellule, ainsi qu'une valeur $V_{OP}$ représentative de l'intensité du gradient de la cellule dans cette orientation principale.

A titre d'exemple, lors de cette étape, on détermine quelle orientation de gradient Gi présente l'intensité VGi la plus élevée parmi les n orientations de gradient G1, ... Gn considérées à l'étape précédente (avec i entier allant de 1 à n). On sélectionne alors l'orientation Gi comme orientation de gradient principale OP de la cellule, et on affecte à la cellule la valeur d'intensité de gradient $V_{OP}$ = VGi. Ce procédé de sélection de l'orientation de gradient principale présente l'avantage d'être particulièrement simple à mettre en oeuvre. Toutefois, un inconvénient est que des conflits peuvent apparaître lorsque, pour une même cellule 103, plusieurs orientations de gradient présentent une même valeur maximale. Ceci est illustré par les figures 4A et 4B.

La figure 4A représente les valeurs binaires des pixels d'une cellule 103 de l'image à analyser, déterminées à l'étape 201. Les pixels ayant la valeur 1 sont représentés en noir sur la figure, et les pixels ayant la valeur 0 sont représentés en blanc.

La figure 4B représente, pour cette même cellule 103, les 8 valeurs d'intensités de gradients d'orientations distinctes calculées à l'étape 203 à partir des masques de la figure 3A. Comme cela apparaît sur la figure 4B, les valeurs d'intensités de gradients pour les orientations nord, nord-ouest, ouest, sud-ouest et sud sont égales à 1, et les valeurs d'intensités de gradients pour les orientations nord-est, est et sud-est sont égales à 2.

Ainsi, il existe un conflit entre les orientations nord-est (G5), est (G4) et sud-est (G8) pour déterminer l'orientation majoritaire.

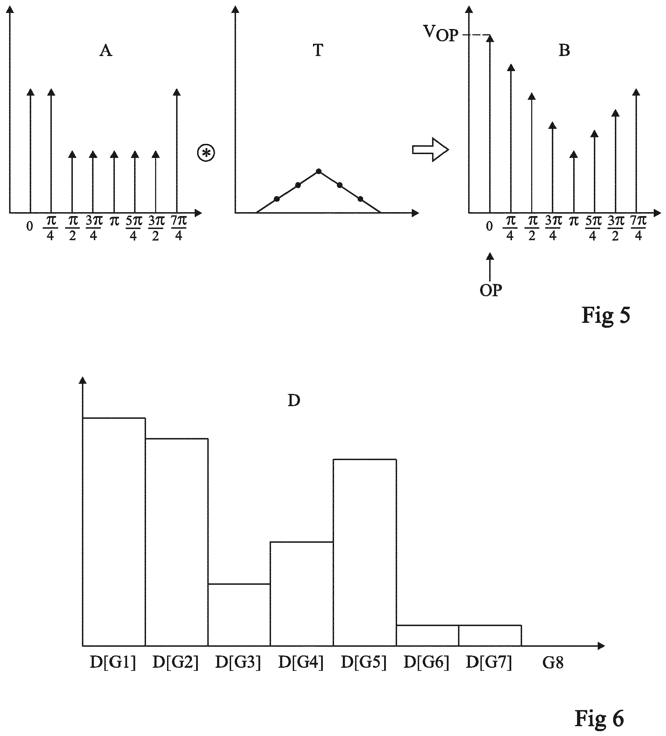

La figure 5 illustre un autre exemple d'un procédé de sélection de l'orientation de gradient principale OP de la cellule, permettant de résoudre de tels conflits.

Dans l'exemple de la figure 5, on réalise une opération de convolution entre un vecteur A de dimension n constitué par les n valeurs d'intensités de gradient VG1, ... VGn calculées à l'étape 203, et un signal triangulaire T, par exemple de dimension (n/2)+1.

Un exemple du vecteur A de dimension n=8 constitué par les valeurs d'intensités de gradients de l'exemple de la figure 4B est représenté en partie gauche de la figure 5, et un exemple du signal triangulaire T est représenté en partie centrale de la figure 5. La partie droite de la figure 5 représente le résultat de la convolution, à savoir un vecteur B de dimension n.

Une fois le vecteur B généré, on détermine la valeur B[Gi] maximale du vecteur B. On sélectionne alors l'orientation Gi comme orientation de gradient principale OP de la cellule, et on affecte à la cellule la valeur d'intensité de gradient $V_{OP}$ = B[Gi] (où B[Gi] est la valeur du vecteur B pour l'orientation angulaire Gi).

Plus généralement, toute autre méthode peut être utilisée à l'étape 205 pour déterminer, à partir des n valeurs d'intensité de gradient VG1, ... VGn déterminées à l'étape 203, l'orientation de gradient principale OP de la cellule ainsi qu'une valeur $V_{OP}$ représentative de l'intensité du gradient de la cellule dans cette orientation principale.

Par ailleurs, la valeur $V_{OP}$ affectée à la cellule peut être pondérée en fonction de la distribution des valeurs binaires des pixels de la cellule, par exemple pour favoriser les distributions dans lesquelles environ la moitié des pixels est à la valeur 1 et l'autre moitié des pixels est à la valeur 0. En effet, l'information de gradient dans ces cellules est généralement plus pertinente que la même information de gradient dans des cellules dans lesquelles la plupart des pixels sont à la valeur 0 ou à la valeur 1.

A titre d'exemple, pour chaque cellule, la valeur $V_{OP}$ peut être pondérée par un coefficient cp définit comme suit :

$$cp = \frac{nbpix\_cell}{2} - \left| \frac{nbpix\_cell}{2} - \sum_{nbpix} pix = 1 \right|$$

où nbpix_cell désigne le nombre de pixels de la cellule, et où l'opérateur $\sum_{nbpix} pix = 1$ désigne le nombre de pixels ayant la valeur binaire 1 dans la cellule.

La figure 6 illustre une étape de génération d'un descripteur D d'une image ou d'une portion d'une image acquise au moyen du capteur de la figure 1. A titre d'exemple, et comme l'illustre la figure 1, les cellules 103 de l'image sont réparties en plusieurs blocs 105 de plusieurs cellules 103 chacun. L'étape de la figure 6 peut alors être réitérée pour chaque bloc 105, de façon à générer un descripteur D par bloc. Les blocs 105 sont par exemple identiques ou similaires. Dans l'exemple de la figure 1, chaque bloc 105 correspond à une sous-matrice de 3*3 cellules 103 voisines du capteur (soit 9*9 pixels 101 voisins). A titre d'exemple, chaque cellule 103 appartient à un seul bloc 105 du capteur, comme illustré en figure 1. A titre de variante, les blocs 105 peuvent se chevaucher c'est-à-dire que chaque cellule peut appartenir à plusieurs blocs 105 distincts de façon à réaliser une analyse plus robuste aux erreurs de détection. A titre de variante, un bloc 105 unique incluant toutes les cellules 103 du capteur est défini, auquel cas un unique descripteur D de l'image est généré à l'étape de la figure 6.

Pour chaque bloc 105 de l'image, le descripteur D généré à l'étape de la figure 6 est constitué d'un vecteur de dimension n. Le descripteur D est illustré sous la forme d'un histogramme sur la figure 6. Il comprend, pour chacune des n orientations de gradient G1, ... Gn considérées à l'étape 203 du procédé de la figure 2, une valeur D[Gi], égale à la somme des valeurs $V_{OP}$ des cellules du bloc ayant pour orientation de gradient principale OP l'orientation Gi.

A partir du ou des descripteurs D de l'image ainsi générés, diverses applications d'analyse automatisée d'images peuvent être implémentées, notamment en utilisant des méthodes connues basées sur un apprentissage à partir d'images de référence préalablement acquises, par exemple des méthodes de type SVM (de l'anglais "Support Vector Machine" - machine à vecteur de support).

Un avantage des descripteurs D générés par le procédé décrit ci-dessus est qu'ils sont à la fois performants pour les applications usuelles d'analyse d'images, notamment pour des applications de détection de personnes, et particulièrement simples à calculer.

Le procédé de génération de descripteurs décrit ci-dessus peut être implémenté entièrement par des circuits de traitement externes au capteur d'images.

Toutefois, de façon préférentielle, tout ou partie de ce procédé est implémentée au sein du capteur d'images lui-même, ce qui permet de réduire la consommation électrique globale du système d'analyse en limitant les transferts d'images complètes entre le capteur et des circuits de traitement externes.

En particulier, différentes architectures de capteurs d'images connues peuvent être adaptées pour mettre en oeuvre, au sein du capteur, et notamment en amont des circuits de conversion analogique-numérique du capteur, au moins certaines des étapes du procédé décrit ci-dessus.

Le procédé de génération de descripteurs décrit ci-dessus est notamment bien adapté pour une implémentation dans un capteur à codage temporel des données, c'est-à-dire un capteur dans lequel chaque pixel comprend une photodiode et un comparateur comparant la tension aux bornes de la photodiode à une tension de référence. Dans un tel capteur, lors d'une phase d'acquisition d'une image, chaque pixel est d'abord réinitialisé par rechargement de sa photodiode à une tension de réinitialisation. La photodiode de chaque pixel est ensuite isolée du noeud d'application de la tension de réinitialisation, et la tension aux bornes de la photodiode décroit en fonction de l'intensité lumineuse reçue par le pixel. Lorsque la tension aux bornes de la photodiode d'un pixel atteint la tension de référence, la sortie du comparateur change d'état. On dit que le pixel s'allume. Le pixel génère alors une impulsion transmise à un circuit de lecture externe au pixel. L'adresse du pixel ayant émis l'impulsion est alors déterminée par le circuit de lecture. L'instant de lecture de l'adresse du pixel est mémorisé et constitue la valeur de sortie du pixel. L'implémentation de l'étape 201 de quantification sur un bit des valeurs de sortie des pixels est alors particulièrement simple à mettre en oeuvre, puisqu'il suffit de fixer une période temporelle de référence définissant le seuil de quantification, et de déterminer, pour chaque pixel, si le pixel s'est allumé ou ne s'est pas allumé à l'issue de la période de référence. On notera en particulier que la période de référence peut être commune à tous les pixels de l'image, ou, dans un mode de réalisation préféré être définie cellule par cellule ou bloc de cellules par bloc de cellules, en fonction de l'instant d'allumage du pixel le plus lumineux de la cellule ou du bloc (ce qui revient à fixer le seuil de quantification des pixels de la cellule ou du bloc en fonction de la valeur maximale des pixels de la cellule ou du bloc tel que décrit ci-dessus).

Le procédé de génération de descripteurs proposé est tout particulièrement adapté pour une implémentation dans un capteur d'images à codage temporel du type décrit dans la demande de brevet français N°15/53799 déposée le 28 avril 2015 (inventeur David Dehaene). Dans un tel capteur, les pixels sont répartis en blocs de plusieurs pixels. Dans chaque bloc de pixels, un circuit de contrôle local est prévu pour, lorsque le premier pixel (c'est-à-dire le pixel le plus lumineux) du bloc s'allume, inhiber l'ensemble des pixels du bloc pendant une période d'inhibition $T_{inh}$ prédéterminée. Pendant la période d'inhibition, les pixels du bloc peuvent s'allumer mais les requêtes sortantes sont bloquées. A l'issue de la période d'inhibition, on dispose d'une carte binaire des pixels du bloc. Autrement dit, à l'issue de la période d'inhibition, on peut affecter aux pixels allumés une première valeur binaire, par exemple la valeur 1, et aux pixels encore éteints une deuxième valeur binaire, par exemple la valeur 0. On réalise ainsi une quantification sur 1-bit des pixels du bloc avec un seuil de quantification fonction de la valeur du pixel le plus lumineux du bloc. De préférence, la période d'inhibition $T_{inh}$ est choisie bloc par bloc en fonction de l'instant d'allumage du pixel le plus lumineux du bloc.

Dans le cas où le procédé de génération de descripteurs décrit ci-dessus est implémenté au sein du capteur d'images, on peut prévoir un système d'analyse susceptible d'être réveillé graduellement en fonction de l'évolution des caractéristiques de la scène. A titre d'exemple, les descripteurs D sont générés en permanence, c'est-à-dire pour chaque image acquise par le capteur, au sein du capteur lui-même. Une première analyse des descripteurs est mise en oeuvre par le capteur lui-même pour détecter un éventuel évènement remarquable dans la scène, par exemple un mouvement. A titre d'exemple, une variation locale du descripteur d'un bloc 105 entre deux images successivement acquises par le capteur peut constituer un tel évènement remarquable. Pour détecter une telle variation, le capteur peut comporter des moyens de stockage interne, par exemple un circuit de stockage spécifique par bloc 105, permettant de mémoriser les descripteurs d'une ou plusieurs images précédentes, ou une information liée aux descripteurs, par exemple les valeurs binaires des pixels du bloc ou l'orientation du bloc dans les images précédentes, pendant la phase d'acquisition et de traitement d'une image courante. Lorsqu'un évènement remarquable est détecté, le capteur commande la mise en oeuvre d'une analyse globale de l'image. Cette analyse globale est par exemple mise en oeuvre par un circuit de traitement externe au capteur. Tous les descripteurs D générés par le capteur pour l'image courante peuvent alors être transmis au circuit de traitement externe pour la mise en oeuvre de l'analyse globale.

Un tel mécanisme de réveil graduel du système d'analyse présente l'avantage de limiter les transferts de données entre le capteur et les circuits de traitement externes.

Des modes de réalisation particuliers ont été décrits. Diverses variantes et modifications apparaîtront à la personne du métier. En particulier, les dimensions (nombre de pixels) des cellules 103 et/ou des blocs de cellules 105 peuvent bien entendu être différentes des exemples décrits ci-dessus.

De plus, les données binaires générées à l'étape 201 peuvent être utilisées pour d'autres fonctions que la génération des descripteurs D, par exemple pour détecter des mouvements en appliquant des filtres sur plusieurs images successives. Des opérations morphologiques peuvent en outre être appliquées aux données binaires pour mettre en exergue des caractéristiques particulières.

En outre, dans une variante de réalisation du procédé de traitement décrit ci-dessus, l'étape 201 de binarisation des valeurs des pixels de l'image peut être omise. Dans ce cas, le calcul des valeurs d'intensités de gradients VG1, ... VGn (étape 203) est réalisé directement à partir des valeurs non binarisées des pixels de l'image.

## Revendications

1. Procédé de traitement, au moyen d'un dispositif électronique, d'une image comprenant une pluralité de pixels (101) répartis en un ou plusieurs blocs (105) comprenant chacun plusieurs cellules (103) de plusieurs pixels, ce procédé comprenant les étapes suivantes :

   a) pour chaque cellule (103), calculer, pour chacune de n orientations de gradients (G1, ... Gn) distinctes, où n est un entier supérieur ou égal à 2, une première valeur d'intensité de gradient (VG1, ... VGn), chaque première valeur d'intensité de gradient (VGi) étant une somme pondérée des valeurs des pixels (101) de la cellule (103) ;
   b) pour chaque cellule (103), déterminer, à partir des n premières valeurs d'intensités de gradients (VG1, ... VGn) calculées à l'étape a), une orientation de gradient principale (OP) de la cellule (103), et une deuxième valeur ($V_{OP}$) représentative de l'intensité du gradient dans cette orientation principale ; et
   c) pour chaque bloc (105), générer un descripteur (D) de n valeurs (D[G1], ... D[Gn]) correspondant respectivement, pour chacune des n orientations de gradient (G1, ... Gn), à la somme des deuxièmes valeurs ($V_{OP}$) des cellules (103) du bloc (105) ayant l'orientation de gradient considérée pour orientation de gradient principale.

2. Procédé selon la revendication 1, dans lequel l'étape a) comprend une étape initiale de quantification sur 1-bit des valeurs des pixels (101) de la cellule (103), chaque première valeur d'intensité de gradient (VGi) étant une somme pondérée des valeurs quantifiées sur 1-bit des pixels (101) de la cellule.

3. Procédé selon la revendication 2, dans lequel, à l'étape a), lors de l'étape initiale de quantification sur 1-bit des valeurs des pixels (101), un seuil de quantification spécifique est utilisé pour chaque cellule (103) ou bloc de cellules (105) de l'image.

4. Procédé selon la revendication 3, dans lequel, à l'étape a), pour chaque cellule (103), le seuil de quantification utilisé lors de l'étape initiale de quantification sur 1-bit des valeurs des pixels (101) de la cellule (103) est fonction de la valeur d'au moins un pixel de la cellule (103) ou du bloc (105) contenant la cellule (103).

5. Procédé selon la revendication 4, dans lequel, à l'étape a), pour chaque cellule (103), le seuil de quantification utilisé lors de l'étape initiale de quantification sur 1-bit des valeurs des pixels (101) de la cellule (103) est fonction de la valeur du pixel le plus lumineux de la cellule (103) ou du bloc (105) contenant la cellule (103).

6. Procédé selon l'une quelconque des revendications 1 à 5, dans lequel, à l'étape a), les coefficients de pondération utilisés pour générer les n premières valeurs d'intensités de gradients (VG1, ... VGn) d'orientations (G1, ... Gn) distinctes de chaque cellule (103) sont des coefficients binaires.

7. Procédé selon l'une quelconque des revendications 1 à 5, dans lequel, à l'étape a), les coefficients de pondération utilisés pour générer les n premières valeurs d'intensités de gradients (VG1, ... VGn) d'orientations (G1, ... Gn) distinctes de chaque cellule (103) sont des coefficients non binaires.

**8.** Procédé selon l'une quelconque des revendications 1 à 7, dans lequel les n orientations de gradient (G1, ... Gn) de l'étape a) sont séparées deux à deux d'une même distance angulaire.

**9.** Procédé selon l'une quelconque des revendications 1 à 8, dans lequel, à l'étape b), on sélectionne comme orientation de gradient principale (OP) de la cellule (103) l'orientation (Gi) pour laquelle la première valeur d'intensité de gradient (VGi) générée à l'étape a) est maximale.

**10.** Procédé selon l'une quelconque des revendications 1 à 8, dans lequel l'étape b) comprend :

une étape de génération d'un vecteur B résultant d'une opération de convolution entre un vecteur A de dimension n constitué par les n premières valeurs d'intensités de gradients (VG1, ... VGn) générées à l'étape a) et un signal triangulaire (T) ; et
une étape où l'on sélectionne comme orientation de gradient principale (OP) de la cellule (103) l'orientation (Gi) pour laquelle la valeur (B[Gi]) du vecteur B est maximale.

**11.** Procédé selon l'une quelconque des revendications 1 à 10, dans lequel, à l'étape b), la deuxième valeur ($V_{OP}$) représentative de l'intensité du gradient de la cellule (103) dans l'orientation de gradient principale (OP) de la cellule (103) est pondérée par un coefficient (cp) fonction de la distribution des valeurs des pixels (101) de la cellule.

**12.** Système comportant :

un capteur d'images comprenant une pluralité de pixels (101) répartis en un ou plusieurs blocs (105) comprenant chacun plusieurs cellules (103) de plusieurs pixels ; et
un circuit de traitement adapté à mettre en oeuvre, pour chaque image acquise par le capteur, un procédé de traitement selon l'une quelconque des revendications 1 à 11.

**13.** Système selon la revendication 12, dans lequel le capteur d'images est un capteur à codage temporel dans lequel chaque pixel (101) comprend une photodiode et un comparateur comparant la tension aux bornes de la photodiode à une tension de référence, chaque pixel (101) étant adapté, lors d'une phase d'acquisition d'une image, à s'allumer en générant une impulsion lorsque la tension aux bornes de sa photodiode atteint la tension de référence.

**14.** Système selon la revendication 13, dans lequel le circuit de traitement comprend, pour chaque bloc (105) de pixels du capteur, un circuit adapté à, lors d'une phase d'acquisition d'une image :

déterminer l'instant où un premier pixel du bloc (105) s'allume ; et
après une période d'inhibition prédéfinie à compter de cet instant, déterminer quels pixels du bloc se sont allumés et quels pixels du bloc ne se sont pas allumés pendant la période d'inhibition.

Fig 1

Fig 2

G1(N)
```
1 1 1
0 1 0
0 0 0
```

G2(O)
```
1 0 0
1 1 0
1 0 0
```

G3(S)
```
0 0 0
0 1 0
1 1 1
```

G4(E)
```
0 0 1
0 1 1
0 0 1
```

G5(NE)
```
0 1 1
0 1 1
0 0 0
```

G6(NO)
```
1 1 0
1 1 0
0 0 0
```

G7(SO)
```
0 0 0
1 1 0
1 1 0
```

G8(SE)
```
0 0 0
0 1 1
0 1 1
```

**Fig 3A**

G1(N)
```
1/3 1/3 1/3
0   1/8 0
0   0   0
```

G2(O)
```
1/3 0   0
1/3 1/8 0
1/3 0   0
```

G3(S)
```
0   0   0
0   1/8 0
1/3 1/3 1/3
```

G4(E)
```
0 0   1/3
0 1/8 1/3
0 0   1/3
```

G5(NE)
```
0 1/3 1/3
0 1/8 1/3
0 0   0
```

G6(NO)
```
1/3 1/3 0
1/3 1/8 0
0   0   0
```

G7(SO)
```
0   0   0
1/3 1/8 0
1/3 1/3 0
```

G8(SE)
```
0 0   0
0 1/8 1/3
0 1/3 1/3
```

**Fig 3B**

103

**Fig 4A**

**Fig 4B**

Fig 5

Fig 6

**Europäisches Patentamt**
**European Patent Office**
**Office européen des brevets**

# RAPPORT DE RECHERCHE EUROPEENNE

Numéro de la demande

EP 18 18 0984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2015/092982 A1 (KANG JI-HONG [KR] ET AL) 2 avril 2015 (2015-04-02)<br>* figure 3 *<br>* figure 4 *<br>* figure 5 *<br>----- | 1-14 | INV.<br>G06K9/46<br>H04N5/355 |
| Y | LE HIR JULIETTE ET AL: "Distributed mixed-signal architecture for programmable smart image sensors",<br>2017 15TH IEEE INTERNATIONAL NEW CIRCUITS AND SYSTEMS CONFERENCE (NEWCAS), IEEE,<br>25 juin 2017 (2017-06-25), pages 353-356,<br>XP033141974,<br>DOI: 10.1109/NEWCAS.2017.8010178<br>* le document en entier *<br>----- | 1-14 | |
| A | US 2013/163870 A1 (CAO YUNYUN [JP] ET AL) 27 juin 2013 (2013-06-27)<br>* figure 2 *<br>* figure 3 *<br>* figure 6 *<br>* figures 7A, 7B *<br>----- | 1-14 | |
| A | LAI CHI QIN ET AL: "A review on pedestrian detection techniques based on Histogram of Oriented gradient feature",<br>2014 IEEE STUDENT CONFERENCE ON RESEARCH AND DEVELOPMENT, IEEE,<br>16 décembre 2014 (2014-12-16), pages 1-6,<br>XP032755228,<br>DOI: 10.1109/SCORED.2014.7072948<br>* le document en entier *<br>----- | 1-14 | DOMAINES TECHNIQUES RECHERCHES (IPC)<br><br>G06K<br>H04N<br>G06T |

Le présent rapport a été établi pour toutes les revendications

| Lieu de la recherche | Date d'achèvement de la recherche | Examinateur |
|---|---|---|
| La Haye | 30 octobre 2018 | Martinière, Anthony |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

# EP 3 428 851 A1

## ANNEXE AU RAPPORT DE RECHERCHE EUROPEENNE
## RELATIF A LA DEMANDE DE BREVET EUROPEEN NO.

EP 18 18 0984

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2018

| Document brevet cité au rapport de recherche | Date de publication | Membre(s) de la famille de brevet(s) | Date de publication |
|---|---|---|---|
| US 2015092982 A1 | 02-04-2015 | KR 20150037091 A<br>US 2015092982 A1 | 08-04-2015<br>02-04-2015 |
| US 2013163870 A1 | 27-06-2013 | CN 103026384 A<br>EP 2667353 A1<br>JP 5861123 B2<br>JP WO2012098842 A1<br>US 2013163870 A1<br>WO 2012098842 A1 | 03-04-2013<br>27-11-2013<br>16-02-2016<br>09-06-2014<br>27-06-2013<br>26-07-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 1553799

**Littérature non-brevet citée dans la description**

- **DE N. DALAL ; B. TRIGGS.** Histograms of oriented gradients for human detection. *IEEE Computer Society Conférence on Computer Vision and Pattern Recognition (CVPR'05),* 2005, vol. 1, 886-893
- **DE E. RUBLEE ; V. RABAUD ; K. KONOLIGE ; G. BRADSKI.** ORB: An efficient alternative to SIFT or SURF. *International conférence on computer vision,* 2011, 2564-2571
- **DE M. CALONDER ; V. LEPETIT ; C. STRECHA ; P. FUA.** Brief: Binary robust independent elementary features. *European conférence on computer vision,* 2010, 778-792

- **DE A. ALAHI ; R. ORTIZ ; P. VANDERGHEYNST.** Freak: Fast retina keypoint. *IEEE conférence on Computer vision and pattern récognition,* 2012, 510-517
- **DE S. LEUTENEGGER ; M. CHLI ; R. Y. SIEGWART.** BRISK: Binary robust invariant scalable keypoints. *International conférence on computer vision,* 2011, 2548-2555